# EUROPEAN PATENT SPECIFICATION

(11) **EP 4 596 403 B1**
(45) Date of publication and mention of the grant of the patent: **28.10.2026**
(21) Application number: 24154863.5
(22) Date of filing: 30.01.2024
(51) Int. Cl.: B64D 11/00, B64D 11/04, B64D 13/06, B64D 13/08

(54) **AIRCRAFT CABIN TROLLEY, AIRCRAFT GALLEY ARRANGEMENT AND AIRCRAFT**
FLUGZEUGKABINENWAGEN, FLUGZEUGBORDKÜCHENANORDNUNG UND FLUGZEUG
CHARIOT DE CABINE D'AÉRONEF, AGENCEMENT DE CUISINE DE BORD D'AÉRONEF ET AÉRONEF

(43) Date of publication of application: 06.08.2025
(73) Proprietor: Airbus Operations GmbH, 21129 Hamburg (DE)
(72) Inventor: Trümper, Torsten, Hamburg (DE); Dallmann, Christopher, Hamburg (DE)
(74) Representative: Airbus Germany

(56) References cited:
- EP-B1- 2 501 612
- WO-A1-2015/168758
- WO-A1-2020/201117
- US-A1- 2022 248 840
- US-B2- 8 171 749
- US-B2- 9 770 100

## Description

### Technical Field

The invention relates to an aircraft cabin trolley and an aircraft galley arrangement comprising said trolley. It further relates to an aircraft with at least one of the aforementioned.

### Background

The current solutions for aircraft cabin trolleys and aircraft galley arrangements comprising such trolleys are different and depending on the aircraft program. The galleys always provide different designs in terms of chilled or non-chilled galleys. A chilled galley has a cold air distribution system in the lower part of the galley, trolley compartments with doors to keep the trolley compartments and the trolleys parked therein cold, a drain interface for the condensation water, and space for the installed cooling unit. In some aircrafts, an air chiller is installed inside the galley beside the trolleys. The customer must abstain of the waste compartment in case of a chilled galley because the air chiller is installed around the waste compartment.

On A330 aircrafts, air chillers are installed underfloor. Air ducts root the cold air between the chiller and the galley in a closed loop. This needs a lot of additional space, weight and installation effort in the aircraft.

On A350 aircraft, a very large and heavy liquid cooling loop connects each galley with the cooling system outside of the pressurized area. In the galley, cooling units are installed, which use the cold liquid to cool the air within a heat exchanger. These systems have an installation weight of several hundred kilograms.

All current installations have in common that they are heavy, and that their weight is integrated into the respective aircraft, whether needed or not.

EP 2501 612 B1 describes the closest prior art. Further prior art is described in WO 2020/201117 A1 which lacks at least the compressor, evaporator and condenser required by the present invention. US 9770 100 B2 is similar to the disclosure of WO 2020/201117 A1.

US 8 171 749 B2 discloses an electrical cooling unit which is intended to be placed in an aircraft cabin trolley. WO 201 5/1 68758 A1 shows a trolley which can be used in an aircraft and comprising a cooling unit. US 2022/248840 A1 describes an inflight service cart with a storage freezer.

### Summary

The problem to be solved is to improve the efficiency of the cooling of aircraft cabin trolleys, in particular in combination with an aircraft galley arrangement. This includes an improvement of the comfort for the operator of such aircraft cabin trolleys.

The problem is solved by the subject matter of the independent claim(s).

The problem underlaying the invention is particularly solved by the following technical teachings:
(1) Aircraft cabin trolley, comprising a body with a top, a bottom, a front and a rear, wherein a door for accessing the inside of the trolley is provided at the front, which is the operator side of the trolley; an electrical cooling unit, including a compressor, an evaporator and a condenser, configured to actively cool the inside of the trolley; a power transfer unit configured to transfer electrical power from a power source outside the trolley to the cooling unit; and a handle for an operator to move the trolley; wherein the electrical cooling unit is configured to create an airflow of air heated by the condenser during operation that is directed towards the handle of the trolley. Thereby, the hands of an operator operating the trolley can be warmed, which increases the comfort for the operator. Such a trolley with an integrated chiller does not require a bulky central external cooling at its parking station. Due to low heat losses, only small amounts of coolant are needed per trolley. Furthermore, more sustainable coolants can be used. Also, the decentralized power supply increases the cooling power consumption.
   Wheels may be connected to the bottom. The coolant used in the cooling unit may be a non-fluorinated gas. A door for accessing the inside of the trolley is provided at the front, i.e. the operator side of the trolley. The aircraft cabin trolley, e.g. its body, may have outer dimensions corresponding to a common aircraft cabin trolley standard, such as the KSSU standard or the ATLAS standard. Waste heat from the trolley, e.g. from the condenser and/or a battery described below, may be removed at the rear of the trolley. For this purpose, a fan may be provided in the trolley or at a galley wall facing the rear of the trolley. This fan could direct the waste heat towards the galley crown, i.e. a space above an aircraft galley.
(2) Aircraft cabin trolley according to section (1), wherein the power transfer unit is an inductive power transfer unit. This improves comfort for the operator of the trolley, since the placement of the trolley in its parking position for power delivery from a power source outside the trolley can be less precise than with a power transfer unit requiring direct contact or even form-fitting contact with a power source outside the trolley, e.g. a plug and socket connection.
(3) Aircraft cabin trolley according to section (1) or (2), further comprising: a battery that is configured to be charged via the power transfer unit only when a desired cooling state of the trolley is obtained. This technical measure further improves the efficiency of the power management, improves battery life, and allows the cooling to be performed and/or continued when the trolley lacks power supply from a power source outside the trolley.
(4) Aircraft cabin trolley according to one of sections (1) to (3), wherein the battery is configured to be cooled by a fan. Thereby, battery life can be improved. Further, the air heated by the battery can be directed towards a desired location of the trolley or outside the trolley.
(5) Aircraft cabin trolley according to one of sections (1) to (4), wherein the condenser and the evaporator are directly connected to each other by means of a capillary tube. This is a cost-efficient solution compared to the use of an expansion valve.
(6) Aircraft cabin trolley according to one of sections (1) to (5), wherein wherein part of said airflow of air heated by the condenser is additionally directed along the bottom and beyond the front. Thereby, the feet of an operator operating the trolley can also be warmed, which increases the comfort for the operator.
(7) Aircraft cabin trolley according to one of sections (1) to (6), wherein the electrical cooling unit is arranged at the top. This makes it possible to bring the condenser fan in a position for blowing towards the trolley handle, and thus to improve the comfort of handling the trolley by using the waste heat for warming its handle. Also, the waste heat may be used for keeping dishes placed on top of the trolley warm.
(8) Aircraft cabin trolley according to section 7, wherein a freezer compartment is proved at the top inside the trolley.
(9) Aircraft cabin trolley according to one of sections (1) to (6), wherein the electrical cooling unit is arranged at the bottom. Such an arrangement can make the trolley more compact and help reduce the noises from compressor.
(10) Aircraft cabin trolley according to one of sections (1) to (6), wherein the electrical cooling unit is arranged at the door. This arrangement has the combined advantage of more compactness of the trolley and creating an airflow passing the condenser towards the handle for warming it, with or without a fan. Further, the condenser being close to the operator of the trolley causes heat irradiation towards the operator, which increases the comfort of the operator.
(11) Aircraft galley arrangement comprising the aircraft cabin trolley according to one of sections (1) to (10), wherein the power transfer unit is configured to dock with a galley power transfer unit on a galley wall. The benefits of this arrangement are mainly caused by the decentralized allocation of its functional units. There is no need for any additional cooling from the galley, resulting in a gain in space and an overall weight loss. Moreover, in case of malfunctioning the trolleys can easily be repaired or exchanged separately. The arrangement according to this teaching of the invention also promises great compatibility. Every aircraft without a chilled galley could be equipped with the new trolley. Only minor adaptations would be needed for the power supply. Another advantage is that the cooling system of the trolley is not based on a fluorinated gas as coolant.
(12) Aircraft cabin trolley according to one of sections 1 to 10 or aircraft galley arrangement according to section 11, comprising a human machine interface configured to perform any combination of the following functions:
   a) switching on/off the cooling unit;
   b) selecting a target temperature of an inside of the trolley;
   c) showing an actual temperature of an inside of the trolley; and/or
   d) showing a temperature curve of a temperature of an inside of the trolley over a certain time.
   This makes operation much easier, efficient, and intuitive for the operator. Further, in case of d), the cooling chain can be controlled to ensure the quality of the food stored in the trolley.
(13) Aircraft with the aircraft cabin trolley or with the aircraft galley arrangement in an aircraft galley according to one of the preceding sections.

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. In the drawings:
- Fig. 1: shows a side view of a trolley according to a first embodiment of the invention and a vertical cross-section through the trolley in a plane that is parallel to a front of the trolley;
- Fig. 2: shows a side view of a trolley according to a second embodiment of the invention and a vertical cross-section through the trolley in a plane that is parallel to the front of the trolley;
- Fig. 3: shows a side view of a trolley according to a third embodiment of the invention; and
- Fig. 4: shows an aircraft galley in an aircraft.

### Detailed Description

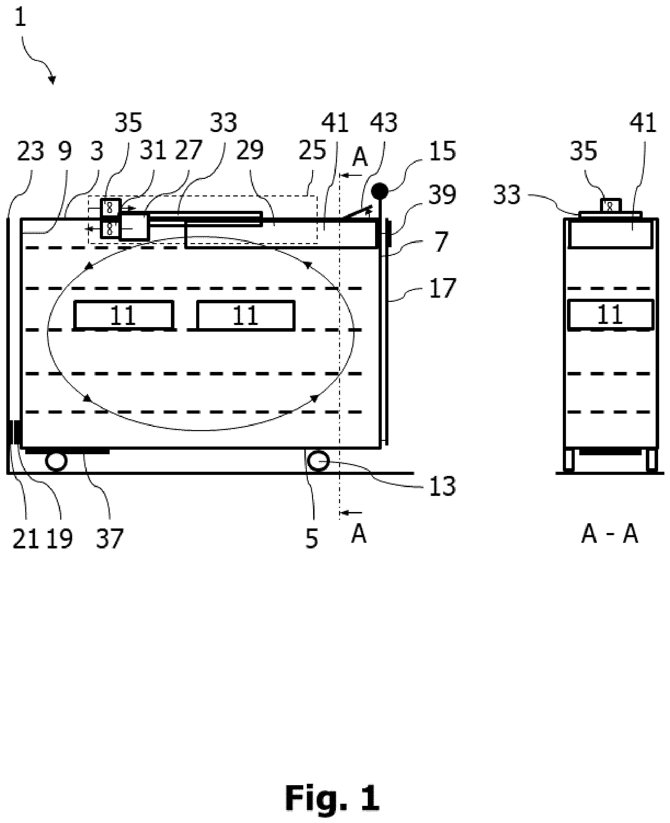

Fig. 1 shows a side view of a trolley 1 according to a first embodiment of the invention and a vertical cross-section through the trolley 1 in a plane that is parallel to a front of the trolley 1. The trolley 1 comprises a box shaped body with a top 3, a bottom 5, a front 7, also referred to as the operator side of the trolley 1, and a rear 9 connected by two sides illustrated in the cross-section. Food and/or beverage trays 11 are located on shelves within the body of the trolley 1. The trolley 1 further comprises wheels 13 connected to the bottom 5 of the body and a handle 15 connected to the trolley 1 at the top 3 and/or front 7 of the body, allowing the trolley 1 to be moved, i.e. pushed or pulled, by an operator, such as a flight attendant. A door 17 for accessing the food and/or beverage trays 11 is provided at the front 7 of the body, and a power transfer unit 19, which here is an inductive power transfer unit 19, e.g. an induction panel, is connected to the rear 9 of the body such that the trolley 1 is configured to be placed with the power transfer unit 19 in contact with or near a corresponding galley power transfer unit 21 on a galley wall 23. The aircraft cabin trolley 1, e.g. its body 3, has outer dimensions corresponding to a common aircraft cabin trolley standard, such as the KSSU standard or the ATLAS standard.

The trolley has an electrical cooling unit 25, comprising the following components: a compressor 27, an evaporator 29, an evaporator fan 31, a condenser 33 and a condenser fan 35. The evaporator 29 may have a power consumption of 50 to 100 W, the condenser 33 may have a power consumption of 80 to 150 W, and each fan may have a power consumption of 1 to 5 W. While the cooling efficiency is improved using fans, a cooling effect will still be achieved using only one of the fans 31, 35 or by omitting the fans 31, 35 altogether. Here, the cooling unit 25 and its components are provided at the top 3, wherein each component can be arranged as shown in Fig. 1. In particular, the evaporator 29 is arranged closer to the inside of the body of the trolley 1 than the condenser 33. The evaporator fan 31 directs airflow to the evaporator 29 such that the air is cooled by the evaporator 29 and circulated in the direction shown by the four arrows of the ellipse drawn in Fig. 1, i.e. towards the rear 9, where the airflow is diverted to the bottom 5 around the trays 11 to cause an air circulation through the whole trolley 1. On the other side, the condenser fan 35 directs airflow to the condenser 33 such that air is heated by the condenser 33 and directed towards the handle 15, thus warming the handle 15 and the hands of an operator of the trolley 1, which increases the comfort for the operator. Condensation water is evaporated from the compressor 27, so that a dedicated drain interface is not necessary.

In operation, the compressor 27 pressurizes coolant which flows to the condenser 33. There, the coolant is cooled convectively by the surrounding air. Subsequently, the coolant flows through an expansion valve or, preferably a capillary tube (both not shown), and thereby decreases in pressure and temperature, e.g. to a temperature range between 0 to 5 °C. In the evaporator 29, heat transmitted from the inside of the trolley 1 warms up the coolant, which then reaches the compressor 27 to repeat the cycle. The coolant may be a non-fluorinated gas. Such gas / refrigerant causes no damage to the ozone layer and its global warming potential is non-existent or negligible.

The electric power for the compressor 27 and the fans 31, 35 comes either directly from the power transfer unit 19 and/or from an integrated battery 37, which here is arranged at the bottom 5 and closer to the rear 9 than to the front 7. The power transfer unit 19 is equipped with an electronic control (not shown) for direct power transfer prior to charging the battery 37, when the trolley 1 is in its parking position in contact with or near a corresponding galley power transfer unit 21 on a galley wall 23, and for switching to battery power supply, when the trolley 1 leaves this parking position.

A human machine interface 39, e.g. a touch screen, is provided at the door 17. However, it can alternatively be provided at the top 3 of the trolley 1 and/or in a galley, e.g. in a galley door, and configured to perform any combination of the following functions:
a) switching on/off the cooling unit 25;
b) selecting a target temperature of an inside of the trolley 1;
c) showing an actual temperature of an inside of the trolley 1; and/or
d) showing a temperature curve of a temperature of an inside of the trolley 1 over a certain time.

Here, a freezer compartment 41 is proved at the top shelf inside the trolley 1. To access the freezer compartment 41, it may be configured as a drawer to be drawn to the front 7, once the door 17 is opened, and/or a flap 43 may be provided at the door 17 or at the top 3, wherein the latter is shown in Fig. 1.

The wall of the trolley 1, including the door 17, may be made of a vacuum insulation wall. Such a vacuum insulation wall is an evacuated gas impermeable heat insulation wall with a core material comprising or consisting of a pressed powder board of fumed silica. A vacuum insulation wall may also be used for the freezer compartment 41.

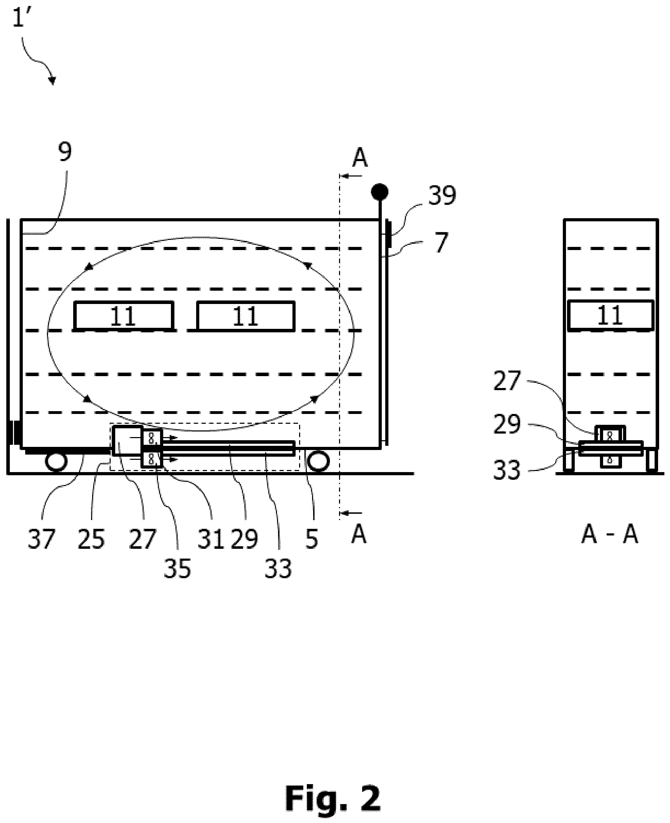

Fig. 2 shows a side view of a trolley 1' according to a second embodiment and a vertical cross-section through the trolley 1' in a plane that is parallel to the front 7 of the trolley 1'. In its basic configuration, in which the airflow of air heated by the condenser 33 is directed only towards the front 7 and not towards the handle 15, the trolley 1' of Fig. 2 is not encompassed by the claims and is presented as an example useful for understanding the claimed invention. Only the modification described further below, in which part of said airflow is directed upwards towards the handle 15, falls within the scope of the claims.

Here, the cooling unit 25 and its components are provided at the bottom 5, wherein each component can be arranged as shown in Fig. 2. In particular, the evaporator 29 is arranged closer to the inside of the body of the trolley 1' than the condenser 33. The evaporator fan 31 directs airflow to the evaporator 29 such that the air is cooled by the evaporator 29 and circulated in the direction shown by the four arrows of the ellipse drawn in Fig. 2, i.e. towards the front 7, where the airflow is diverted to the top 3 around the trays 11 to cause an air circulation through the whole trolley 1'. On the other side, the condenser fan 35 directs airflow to the condenser 33 such that air is heated by the condenser 33 and directed towards the front 7, thus warming the feet of an operator of the trolley 1'. The condenser fan 35 may be configured to draw air surrounding the battery 37, thus cooling the battery 37. In fact, the condenser fan 35 may be placed such, e.g. closer to the rear 9 than the battery 37, that its airflow first reaches the battery 37 and then the condenser 33. Further, the condenser fan 35 may direct an airflow of air heated by the condenser 33 during operation that is directed towards the operator side of the trolley 1', thus creating a warm airflow along the bottom 5 and beyond the front 7, thereby warming the feet of an operator of the trolley 1, which increases the comfort for the operator. In a modification, which falls within the scope of the claims, part of the airflow is directed upwards towards the handle 15 to further achieve the effect described in the first embodiment. Condensation water is evaporated from the compressor 27, so that a dedicated drain interface is not necessary.

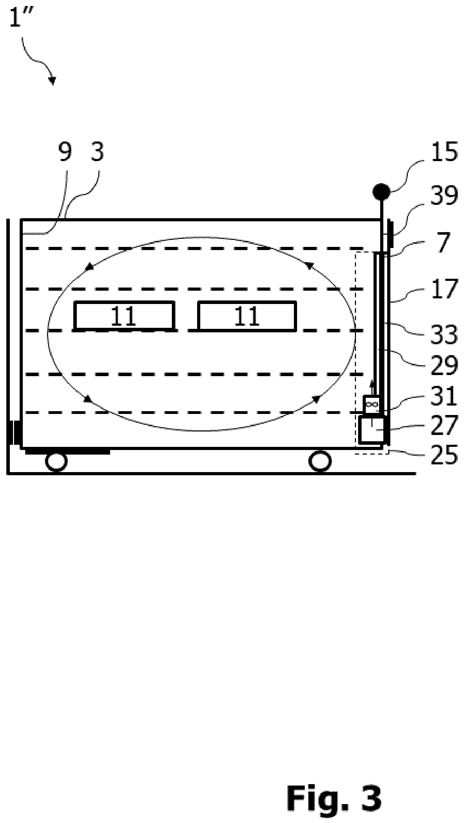

Fig. 3 shows a side view of a trolley 1" according to a third embodiment of the invention.

Here, the cooling unit 25 and its components are provided at the front 7, e.g. are integrated in the door 17, wherein each component can be arranged as shown in Fig. 3. While Fig. 3 does not show a condenser fan, such a condenser fan can readily be provided as in the other two embodiments. In particular, the evaporator 29 is arranged closer to the inside of the body of the trolley 1" than the condenser 33. The evaporator fan 31 directs airflow to the evaporator 29 such that the air is cooled by the evaporator 29 and circulated in the direction shown by the four arrows of the ellipse drawn in Fig. 3, i.e. towards the top 3, where the airflow is diverted to the rear 9 around the trays 11 to cause an air circulation through the whole trolley 1". On the other side, air is heated by the condenser 33 and rises upwards towards the handle 15, thus warming the handle 15 and the hands of an operator of the trolley 1", which increases the comfort for the operator. Condensation water is evaporated from the compressor 27, so that a dedicated drain interface is not necessary.

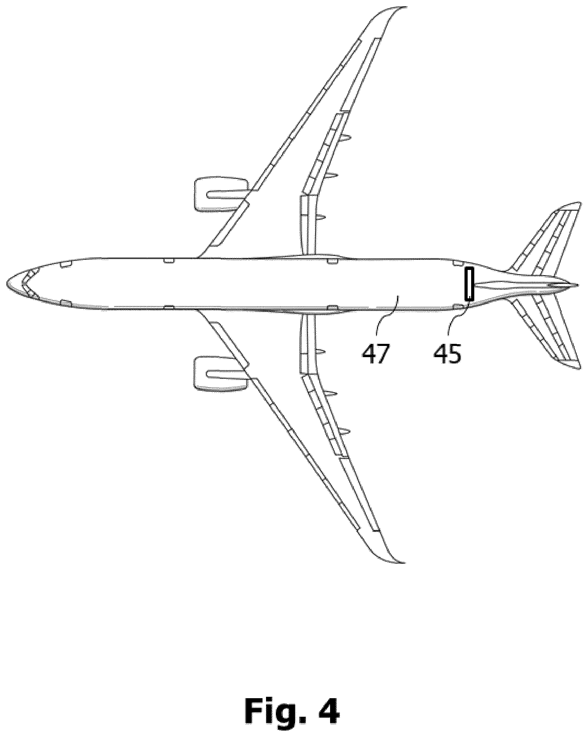

Fig. 4 shows an aircraft galley 45 in an aircraft 47, wherein the trolley 1, 1', 1" is configured to be parked in a compartment of the aircraft galley 45.

In another embodiment, which is not shown in the figures, waste heat from the trolley, e.g., from the condenser 33 and/or the battery 37, may be removed at the rear 9 of the trolley. For this purpose, a fan (not shown) may be provided in the trolley or at the galley wall 23 facing the rear 9 of the trolley. This fan could direct the waste heat towards the galley crown, i.e., a space above the aircraft galley 45.

## Claims

1. Aircraft cabin trolley (1, 1', 1"), comprising:
a body with a top (3), a bottom (5), a front (7) and a rear (9), wherein a door (17) for accessing the inside of the trolley (1, 1', 1") is provided at the front (7), which is the operator side of the trolley (1, 1', 1");
an electrical cooling unit (25), including a compressor (27), an evaporator (29) and a condenser (33), configured to actively cool the inside of the trolley (1, 1', 1");
a power transfer unit (19) configured to transfer electrical power from a power source outside the trolley (1, 1', 1") to the cooling unit (25); and
a handle (15) for an operator to move the trolley (1, 1', 1");
wherein the electrical cooling unit (25) is configured to create an airflow of air heated by the condenser (33) during operation;
**characterized in that**
said airflow is directed towards the handle (15) of the trolley (1, 1").

2. Aircraft cabin trolley (1, 1', 1") according to claim 1, wherein the power transfer unit (19) is an inductive power transfer unit (19).

3. Aircraft cabin trolley (1, 1', 1") according to claim 1 or 2, further comprising:
a battery (37) that is configured to be charged via the power transfer unit (19) only when a desired cooling state of the trolley (1, 1', 1") is obtained.

4. Aircraft cabin trolley (1') according to one of claims 1 to 3, wherein the battery (37) is configured to be cooled by a fan (35).

5. Aircraft cabin trolley (1, 1', 1") according to one of claims 1 to 4, wherein the condenser (33) and the evaporator (29) are directly connected to each other by means of a capillary tube.

6. Aircraft cabin trolley (1, 1', 1") according to one of claims 1 to 5, wherein part of said airflow of air heated by the condenser (33) is additionally directed along the bottom (5) and beyond the front (7).

7. Aircraft cabin trolley (1) according to one of claims 1 to 6, wherein the electrical cooling unit (25) is arranged at the top (3).

8. Aircraft cabin trolley (1) according to claim 7, wherein a freezer compartment (41) is proved at the top inside the trolley (1).

9. Aircraft cabin trolley (1) according to one of claims 1 to 6, wherein the electrical cooling unit (25) is arranged at the bottom (5).

10. Aircraft cabin trolley (1) according to one of claims 1 to 6, wherein the electrical cooling unit (25) is arranged at the door (15).

11. Aircraft galley arrangement comprising the aircraft cabin trolley (1, 1', 1") according to one of claims 1 to 10, wherein the power transfer unit (19) is configured to dock with a galley power transfer unit (21) on a galley wall (23).

12. Aircraft cabin trolley (1, 1', 1") according to one of claims 1 to 10 or aircraft galley arrangement according to claim 11, comprising a human machine interface (39) configured to perform any combination of the following functions:
a) switching on/off the cooling unit (25);
b) selecting a target temperature of an inside of the trolley (1, 1', 1");
c) showing an actual temperature of an inside of the trolley (1, 1', 1"); and/or
d) showing a temperature curve of a temperature of an inside of the trolley (1, 1', 1") over a certain time.

13. Aircraft (47) with the aircraft cabin trolley (1, 1', 1") or with the aircraft galley arrangement in an aircraft galley (45) according to one of the preceding claims.

## Patentansprüche

1. Flugzeugkabinentrolley (1, 1', 1"), umfassend: einen Korpus mit einer Oberseite (3), einer Unterseite (5), einer Vorderseite (7) und einer Rückseite (9), wobei eine Tür (17) zum Zugreifen auf das Innere des Trolleys (1, 1', 1") an der Vorderseite (7) vorgesehen ist, welche die Bedienerseite des Trolleys (1, 1', 1") ist; eine elektrische Kühlheinheit (25), die einen Kompressor (27), einen Verdampfer (29) und einen Verflüssiger (33) beinhaltet und konfiguriert ist, das Innere des Trolleys (1, 1', 1") aktiv zu kühlen; eine Energieübertragungseinheit (19), die konfiguriert ist, elektrische Energie von einer Energiequelle außerhalb des Trolleys (1, 1', 1") auf die Kühleinheit (25) zu übertragen; und einen Handgriff (15) für einen Bediener zum Bewegen des Trolleys (1, 1', 1"); wobei die elektrische Kühleinheit (25) konfiguriert ist, im Betrieb einen Luftstrom aus durch den Verflüssiger (33) erwärmter Luft zu erzeugen; **dadurch gekennzeichnet, dass** der Luftstrom auf den Handgriff (15) des Trolleys (1, 1") gerichtet ist.

2. Flugzeugkabinentrolley (1, 1', 1") nach Anspruch 1, wobei die Energieübertragungseinheit (19) eine induktive Energieübertragungseinheit (19) ist.

3. Flugzeugkabinentrolley (1, 1', 1") nach Anspruch 1 oder 2, ferner umfassend: eine Batterie (37), die konfiguriert ist, über die Energieübertragungseinheit (19) nur dann geladen zu werden, wenn ein gewünschter Kühlzustand des Trolleys (1, 1', 1") erreicht ist.

4. Flugzeugkabinentrolley (1') nach einem der Ansprüche 1 bis 3, wobei die Batterie (37) konfiguriert ist, durch ein Gebläse (35) gekühlt zu werden.

5. Flugzeugkabinentrolley (1, 1', 1") nach einem der Ansprüche 1 bis 4, wobei der Verflüssiger (33) und der Verdampfer (29) mittels eines Kapillarrohrs direkt miteinander verbunden sind.

6. Flugzeugkabinentrolley (1, 1', 1") nach einem der Ansprüche 1 bis 5, wobei ein Teil des Luftstroms aus durch den Verflüssiger (33) erwärmter Luft zusätzlich entlang der Unterseite (5) und über die Vorderseite (7) hinaus gerichtet ist.

7. Flugzeugkabinentrolley (1) nach einem der Ansprüche 1 bis 6, wobei die elektrische Kühleinheit (25) an der Oberseite (3) angeordnet ist.

8. Flugzeugkabinentrolley (1) nach Anspruch 7, wobei ein Gefrierfach (41) oben im Inneren des Trolleys (1) vorgesehen ist.

9. Flugzeugkabinentrolley (1) nach einem der Ansprüche 1 bis 6, wobei die elektrische Kühleinheit (25) an der Unterseite (5) angeordnet ist.

10. Flugzeugkabinentrolley (1) nach einem der Ansprüche 1 bis 6, wobei die elektrische Kühleinheit (25) an der Tür (15) [Anm.: im Text steht "door (15)"] angeordnet ist.

11. Flugzeugbordküchenanordnung, umfassend den Flugzeugkabinentrolley (1, 1', 1") nach einem der Ansprüche 1 bis 10, wobei die Energieübertragungseinheit (19) konfiguriert ist, an eine Bordküchen-Energieübertragungseinheit (21) an einer Bordküchenwand (23) anzudocken.

12. Flugzeugkabinentrolley (1, 1', 1") nach einem der Ansprüche 1 bis 10 oder Flugzeugbordküchenanordnung nach Anspruch 11, umfassend eine Mensch-Maschine-Schnittstelle (39), die konfiguriert ist, eine beliebige Kombination der folgenden Funktionen auszuführen: Ein-/Ausschalten der Kühleinheit (25); Auswählen einer Zieltemperatur eines Inneren des Trolleys (1, 1', 1"); Anzeigen einer Ist-Temperatur eines Inneren des Trolleys (1, 1', 1"); und/oder Anzeigen eines Temperaturverlaufs einer Temperatur eines Inneren des Trolleys (1, 1', 1") über eine bestimmte Zeit.

13. Flugzeug (47) mit dem Flugzeugkabinentrolley (1, 1', 1") oder mit der Flugzeugbordküchenanordnung in einer Flugzeugbordküche (45) nach einem der vorhergehenden Ansprüche.

## Revendications

1. Chariot de cabine d'aéronef (1, 1', 1''), comprenant : un corps avec une partie supérieure (3), une partie inférieure (5), une partie avant (7) et une partie arrière (9), dans lequel une porte (17) pour accéder à l'intérieur du chariot (1, 1', 1") est prévue au niveau de la partie avant (7), qui est le côté opérateur du chariot (1, 1', 1") ; une unité de refroidissement électrique (25), comprenant un compresseur (27), un évaporateur (29) et un condenseur (33), configurée pour refroidir activement l'intérieur du chariot (1, 1', 1") ; une unité de transfert d'énergie (19) configurée pour transférer de l'énergie électrique depuis une source d'énergie située à l'extérieur du chariot (1, 1', 1") vers l'unité de refroidissement (25) ; et une poignée (15) pour qu'un opérateur déplace le chariot (1, 1', 1") ; dans lequel l'unité de refroidissement électrique (25) est configurée pour créer un flux d'air constitué d'air chauffé par le condenseur (33) pendant le fonctionnement ; **caractérisé en ce que** ledit flux d'air est dirigé vers la poignée (15) du chariot (1, 1'').

2. Chariot de cabine d'aéronef (1, 1', 1") selon la revendication 1, dans lequel l'unité de transfert d'énergie (19) est une unité de transfert d'énergie inductive (19).

3. Chariot de cabine d'aéronef (1, 1', 1") selon la revendication 1 ou 2, comprenant en outre : une batterie (37) qui est configurée pour être chargée par l'intermédiaire de l'unité de transfert d'énergie (19) uniquement lorsqu'un état de refroidissement souhaité du chariot (1, 1', 1") est obtenu.

4. Chariot de cabine d'aéronef (1') selon l'une des revendications 1 à 3, dans lequel la batterie (37) est configurée pour être refroidie par un ventilateur (35).

5. Chariot de cabine d'aéronef (1, 1', 1") selon l'une des revendications 1 à 4, dans lequel le condenseur (33) et l'évaporateur (29) sont directement raccordés l'un à l'autre au moyen d'un tube capillaire.

6. Chariot de cabine d'aéronef (1, 1', 1") selon l'une des revendications 1 à 5, dans lequel une partie dudit flux d'air constitué d'air chauffé par le condenseur (33) est en outre dirigée le long de la partie inférieure (5) et au-delà de la partie avant (7).

7. Chariot de cabine d'aéronef (1) selon l'une des revendications 1 à 6, dans lequel l'unité de refroidissement électrique (25) est disposée au niveau de la partie supérieure (3).

8. Chariot de cabine d'aéronef (1) selon la revendication 7, dans lequel un compartiment congélateur (41) est prévu en haut à l'intérieur du chariot (1).

9. Chariot de cabine d'aéronef (1) selon l'une des revendications 1 à 6, dans lequel l'unité de refroidissement électrique (25) est disposée au niveau de la partie inférieure (5).

10. Chariot de cabine d'aéronef (1) selon l'une des revendications 1 à 6, dans lequel l'unité de refroidissement électrique (25) est disposée au niveau de la porte (15).

11. Agencement de cuisine de bord d'aéronef comprenant le chariot de cabine d'aéronef (1, 1', 1") selon l'une des revendications 1 à 10, dans lequel l'unité de transfert d'énergie (19) est configurée pour s'apparier avec une unité de transfert d'énergie de cuisine de bord (21) sur une paroi de cuisine de bord (23).

12. Chariot de cabine d'aéronef (1, 1', 1") selon l'une des revendications 1 à 10 ou agencement de cuisine de bord d'aéronef selon la revendication 11, comprenant une interface homme-machine (39) configurée pour exécuter toute combinaison des fonctions suivantes : allumer/éteindre l'unité de refroidissement (25) ; sélectionner une température cible d'un intérieur du chariot (1, 1', 1") ; afficher une température réelle d'un intérieur du chariot (1, 1', 1") ; et/ou afficher une courbe de température d'une température d'un intérieur du chariot (1, 1', 1") au cours d'un certain temps.

13. Aéronef (47) avec le chariot de cabine d'aéronef (1, 1', 1") ou avec l'agencement de cuisine de bord d'aéronef dans une cuisine de bord d'aéronef (45) selon l'une des revendications précédentes.
